(19) Europäisches Patentamt
European Patent Office
Office européen des brevets

(11) **EP 1 130 418 A1**

(12) **DEMANDE DE BREVET EUROPEEN**

(43) Date de publication:
**05.09.2001 Bulletin 2001/36**

(51) Int Cl.[7]: **G01V 1/52**

(21) Numéro de dépôt: **01400491.5**

(22) Date de dépôt: **26.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **01.03.2000 FR 0002625**

(71) Demandeur: **Geoservices SA**
**93151 Le Blanc-Mesnil (FR)**

(72) Inventeurs:
• **Cecconi, Fabio**
**93700 Drancy (FR)**
• **Soulier, Louis**
**95110 Sannois (FR)**

(74) Mandataire: **Ilgart, Jean-Christophe**
**BREVALEX**
**3, rue du Docteur Lancereaux**
**75008 Paris (FR)**

(54) **Dispositif et procédé de mesures sismiques dans un puits de forage**

(57) On procède à un double enregistrement d'ondes sismiques par un capteur de référence (8) à la surface et par un capteur (12) situé dans le puits (1) de forage. Les mesures sont synchronisées par un système d'horloges, l'horloge associé au capteur (12) étant spécifiquement conçue pour garantir cette synchronisation malgré les conditions de services présentes au fond d'un puits de forage (vibrations, chocs, température).

FIG. 1a

EP 1 130 418 A1

**Description**

L'invention se rapporte à un dispositif et à un procédé de mesures sismiques dans un puits de forage, et permet de réaliser au cours d'un forage d'un puits pétrolier une exploration sismique des terrains environnants.

Les mesures sismiques en cours de forage pétrolier sont bien connues : une source d'ondes sismiques est placée sur le sol à quelque distance du puits de forage et produit des ondes de choc qui se propagent dans le terrain. La propagation peut se faire soit directement soit indirectement (par réflexion sur les interfaces géologiques du sous-sol). Un capteur tel qu'un hydrophone, géophone ou accéléromètre détecte ces ondes. Les temps de propagation directe et indirecte permettent de calculer respectivement le profil sismique vertical et la position des réflecteurs sismiques situés sous le trépan. Pour effectuer ces calculs de position il faut disposer d'au moins deux de ces capteurs dont l'un est disposé en surface et l'autre est situé dans le puits. Cet exemple n'est pas limitatif des mesures sismiques en cours de forage car on peut aussi bien avoir une disposition inverse selon laquelle la source sismique est placée dans le puits (il peut par exemple s'agir du trépan de forage) et dans ce cas la capteur de référence sera placé dans l'outil de mesure et les capteurs sismiques seront situés en surface. Dans cette configuration aussi les ondes sismiques peuvent se propager directement vers la surface ou se réfléchir sur les interfaces géologiques situées sous le trépan de forage et se propager ensuite vers la surface. Et de façon analogue à la précédente, on pourra déterminer la position de ces réflecteurs sismiques.

Pourtant, des problèmes difficiles et non résolus à ce jour se posent pour synchroniser, sans liaison électrique, les mesures associées aux deux capteurs de fond et de surface en raison de la vitesse de propagation des ondes sismiques et de la précision demandée. En effet les vitesses de propagation des ondes sont de l'ordre de 2000 à 5000 m à la seconde dans un terrain sédimentaire et les mesures doivent permettre de déterminer la position spatiale des réflecteurs avec une incertitude meilleure que 10 mètres par rapport à la surface. En terme d'incertitude relative, c'est-à-dire sur la position des différents réflecteurs les uns par rapport aux autres, elle doit être de l'ordre du mètre. Or aucune des horloges usuelles que l'on pourrait associer aux capteurs et qui permettraient de tenir la précision requise ne survivrait aux conditions de services présentes au fond d'un puits de forage (vibrations, chocs, température).Pourtant l'utilité de ces mesures n'est plus à démontrer, en effet elles permettent par exemple de déterminer sous les dômes de sel la position des failles et réservoirs ou de préciser l'interprétation des données sismiques de surface (cas des réservoirs dont l'image est obscurcie par la présence au-dessus de ces derniers d'un nuage de gaz).

Un exemple de dispositif antérieur de ce type de mesure dans ce domaine technique est décrit par le brevet français 2 742 880 de l'Institut Français du Pétrole qui propose des méthodes alternatives pour résoudre le problème de la synchronisation des mesures comme par exemple l'utilisation d'un transmission électromagnétique ou l'utilisation d'ondes vibratoires se propageant dans le train de tiges pour corriger à posteriori les dérives des horloges. Mais si ces modes de synchronisation permettent de maintenir l'erreur de synchronisation des horloges à quelques millisecondes, ce qui est tout juste acceptable, il faut ajouter que les synchronisations en cours d'essai ne sont pas toujours possibles puisque certains terrains atténuent les ondes électromagnétiques dans une proportion telle que le rapport signal à bruit sur le récepteur de fond de puits ne permet pas de réaliser la synchronisation recherchée. De la même façon les ondes vibratoires se propageant le long du train de tiges peuvent être amorties dans une proportion telle qu'elles ne soient plus détectables en surface.

On doit aussi mentionner le brevet américain 5 555 220, qui décrit une sonde sismique attachée à un câble et qu'on descend dans le puits. Cette sonde impose d'arrêter le forage à chaque fois qu'elle est utilisée et de la remonter à la surface avant de reprendre le forage, ce qui est contraignant mais ne pose pas de problème sérieux de synchronisation de l'horloge, dont la dérive reste faible grâce à la brièveté des essais prévus dans cette technique particulière : une horloge à quartz ordinaire enfermée dans une enceinte isolante suffit.

L'invention constitue une solution à ce problème de synchronisation des mesures dans le contexte particulier des essais sismiques de longue durée, pour lesquels les événements responsables des dérives des horloges, en premier lieu les échauffements, se font pleinement sentir même à travers une enceinte isolante, et des dérives relatives qui seraient admissibles pour des durées brèves produisent alors des dérives totales excessives ; elle se fonde sur la mise au point d'horloges hyperstables et adaptées aux conditions de ces essais pour ne présenter qu'une très faible dérive de la fréquence de sortie (entre $10^{-8}$ et $10^{-9}$ en valeurs relatives soit 1 à 10 ppb (partie par milliard)). L'incertitude de synchronisation est alors comprise entre quelques dixièmes de milliseconde et une milliseconde pour une durée d'essai de quelques jours, ce qui est la durée typique d'un essai avec un outil laissé au fond d'un puits, et qui permet de réaliser des acquisitions de mesures parfaitement synchronisées indépendamment des conditions du puits et sans nécessiter d'intervention ralentissant le processus de forage.

S'il est relativement simple de trouver des horloges satisfaisant à cette condition de dérive pour le capteur de surface, il en va tout autrement pour l'horloge du capteur de fond, sans cesse susceptible d'être déréglée par des changements de température, des chocs et des vibrations. Un point essentiel de l'invention a donc été la mise au point de cette horloge.

Sous sa forme la plus générale, l'invention est relative à un dispositif permettant de réaliser des mesures sismiques dans un puits en cours de forage, comprenant en surface une source sismique et un enregistreur relié à un ou plusieurs capteurs sismiques de référence et, dans le puits, un capteur sismique installé dans une garniture de forage, où les capteurs et enregistreurs sismiques sont associés à un système d'horloges synchronisées de faible dérive, caractérisé en ce que l'horloge associée au capteur sismique de fond est une horloge de type dual-mode (telle que décrite dans le brevet US 4872765).

De plus, l'horloge associée au capteur sismique d'outil est enclose dans une enceinte (de type Dewar ou réalisée en matériaux isolants) qui inclut un moyen de régulation thermique afin de permettre l'asservissement de la température de l'horloge.

Le système de régulation thermique comprend normalement un moyen de chauffage, mais on peut aussi utiliser un moyen de refroidissement (comme par exemple des modules Peltier) ou même une combinaison de ces deux moyens. La température d'asservissement est modifiable par l'utilisateur, il devient alors possible de choisir une valeur de température légèrement supérieure à celle du puits de façon à minimiser l'apport d'énergie nécessaire à la régulation thermique.

L'horloge du capteur de référence situé en surface peut être une horloge à quartz maintenue de préférence à une température déterminée correspondant à une zone de stabilité de fréquence du quartz.

Un procédé conforme à l'invention consiste ainsi à installer une source sismique, un capteur sismique de référence en surface, un capteur sismique de puits dans un outil intégré à une garniture de forage, à pourvoir les capteurs d'horloges à faible dérive, à descendre l'outil dans le puits et à envoyer des ondes sismiques aux capteurs via les terrains à investiguer; il est caractérisé en ce que l'horloge du puits est maintenue à une température déterminée mais susceptible d'être modifiée, et en ce qu'une synchronisation des horloges est faite quand la température déterminée est modifiée.

Selon un autre procédé particulier, une synchronisation unique, préliminaire à l'essai, est faite avant de descendre l'outil dans le puits, et la température de l'horloge du capteur de puits est maintenue à une valeur uniforme.

L'invention implique aussi l'emploi de techniques pour synchroniser les horloges, faire démarrer les enregistrements des mesures et récupérer les données enregistrées pendant la campagne d'essai, quand l'outil est engagé dans le puits. Certaines de ces techniques sont connues mais seront rappelées brièvement dans ce texte.

L'invention sera décrite plus en détail à l'aide des figures suivantes qui en feront mieux saisir les caractères, aspects et avantages :

- la figure 1a illustre l'allure générale du dispositif de mesures sismiques,
- la figure 1b illustre une méthode alternative du dispositif de mesures sismiques,
- la figure 2 illustre un dépouillement de mesures,
- la figure 3a illustre la configuration de l'appareillage au fond du puits,
- la figure 3b illustre une configuration alternative de l'appareillage au fond du puits,
- la figure 4 illustre schématiquement le système de mesure sous forme d'organigramme,
- la figure 5 illustre l'horloge de fond,
- les figures 6a et 6b illustrent deux réalisations possibles du montage du quartz de l'horloge,
- la figure 7 donne un exemple de courbes de variation de la fréquence en fonction de la température pour un quartz de coupe SC,
- et la figure 8 illustre une variation de la fréquence en fonction de la température dans plusieurs situations expérimentales.

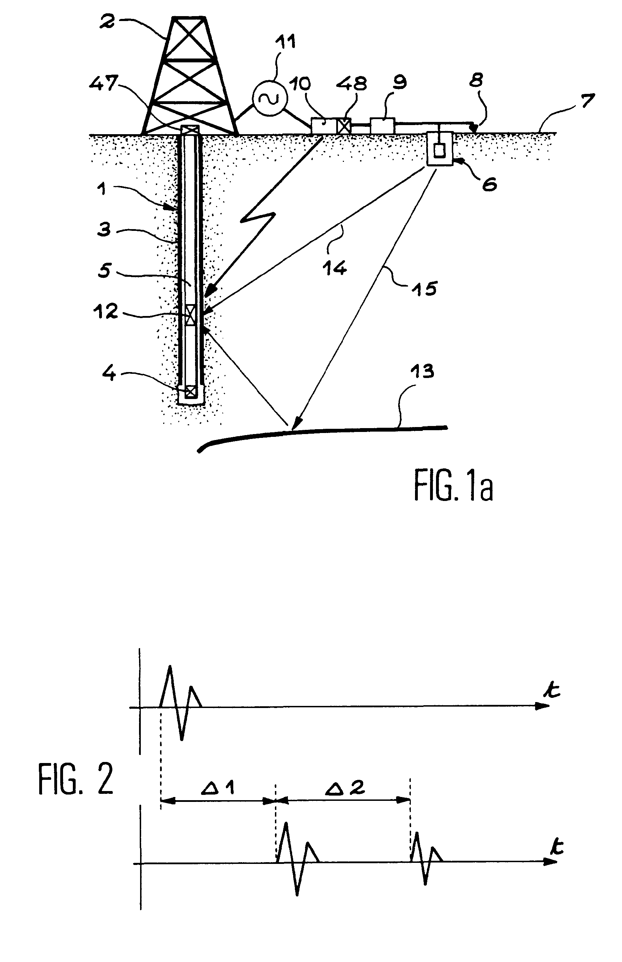

En se reportant à la figure 1a, on voit qu'un puits 1 a été foré sous un derrick 2, ce puits pouvant être partiellement couvert dans sa partie supérieur par un tubage 3. Un trépan 4 se trouve au fond du puits 1, suspendu à un train de tiges 5. L'appareillage utilisé pour l'invention comprend une source sismique 6 enterrée sous la surface 7 du sol, un géophone de référence 8, un enregistreur sismique de surface 9, un module de commande 10, ainsi qu'un transmetteur électromagnétique 11, tous situés à la surface 7 et reliés entre eux. Enfin, un outil 12 est situé dans le train de tiges 5 non loin du fond du puits, à quelque distance du trépan 4. L'outil 12 est affecté aux mesures dans le puits.

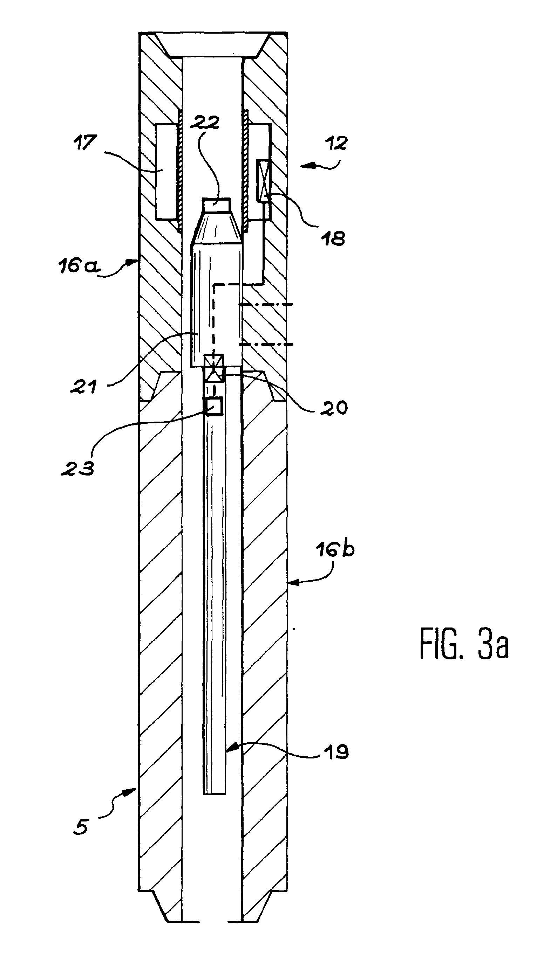

Quand la source sismique 6 émet des ondes, elles sont détectées par le géophone de référence 8 et le capteur sismique disposé dans l'outil 12. Les alternances géologiques dans les terrains forés se traduisent par la présence de réflecteurs sismiques tels que 13 qui engendrent des ondes réfléchies et transmises. Ainsi le capteur situé dans l'outil 12 peut recevoir l'onde par un trajet direct 14 ou réfléchi 15. Le diagramme supérieur de la figure 2 représente une forme d'onde émise par la source 6, telle qu'elle est recueillie par le géophone de référence 8, le diagramme inférieur illustre que l'outil 12 reçoit l'onde deux fois, une première fois par le trajet direct 14 de l'onde incidente, après un temps $\Delta 1$, et une deuxième fois par le trajet réfléchi 15 après le temps supplémentaire $\Delta 2$ ; comme le géophone de référence 8 est proche de la source sismique 6, il reçoit presque immédiatement l'onde de choc, et la longueur du trajet direct 14 est proportionnelle sensiblement à $\Delta 1$, celle du trajet réfléchi 15 à la somme $(\Delta 1+\Delta 2)$. Un nombre suffisant de ces mesures, répétées pour diverses cotes de l'outil 12 (en général une mesure tous les 10 m), permet de déterminer la position de l'interface 13. Il est toutefois nécessaire que les mesures du géophone de référence 8 et du capteur situé dans l'outil 12 soient synchronisées avec une très grande précision pour que la mesure de Δ1 soit correcte.

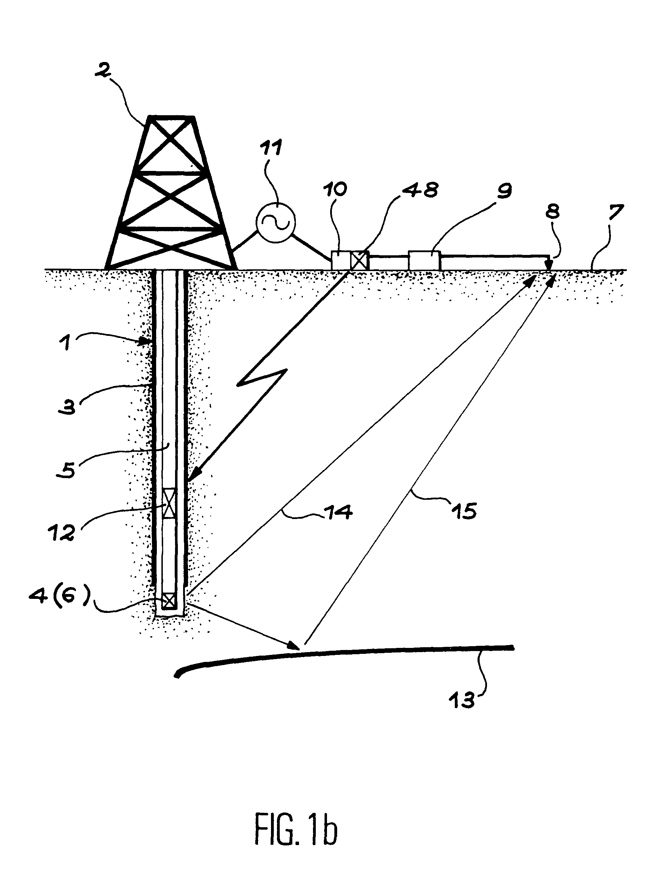

La figure 1b décrit un agencement analogue, si ce n'est que la source sismique est intégrée au trépan 4 et donc située dans le puits : la mesure porte sur les trajets d'onde 14 et 15 pour parvenir au géophone 8, qui est alors le plus éloigné de la source sismique, et le capteur d'outil sert de capteur de référence. Cette interversion des rôles des capteurs n'a pas d'influence sur leur construction.

La figure 3a présente une forme de réalisation possible de l'outil sismique 12. Dans la forme de réalisation présentée, l'outil 12 est constitué de deux masses-tiges 16a et 16b appartenant au train de tiges 5 ; la masse-tige 16a comporte une chambre étanche 17 dans laquelle peut être logé en particulier le capteur sismique d'outil 18.

Une navette 19 est fixée à la masse-tige 16a de façon amovible par l'intermédiaire d'un élément mécanique 21 appelé monopode. Le monopode 21 assure également la liaison électrique entre le capteur d'outil 18 et la navette 19 par l'intermédiaire du connecteur 20. La navette 19 contient les modules d'acquisition et de mémorisation, l'horloge de fond 23 ainsi que la source d'énergie (batterie) permettant d'alimenter le système. Le monopode 21 peut être équipé d'un connecteur étanche sur sa partie supérieure, permettant ainsi de se connecter à la navette 19 depuis la surface par l'intermédiaire d'un câble.

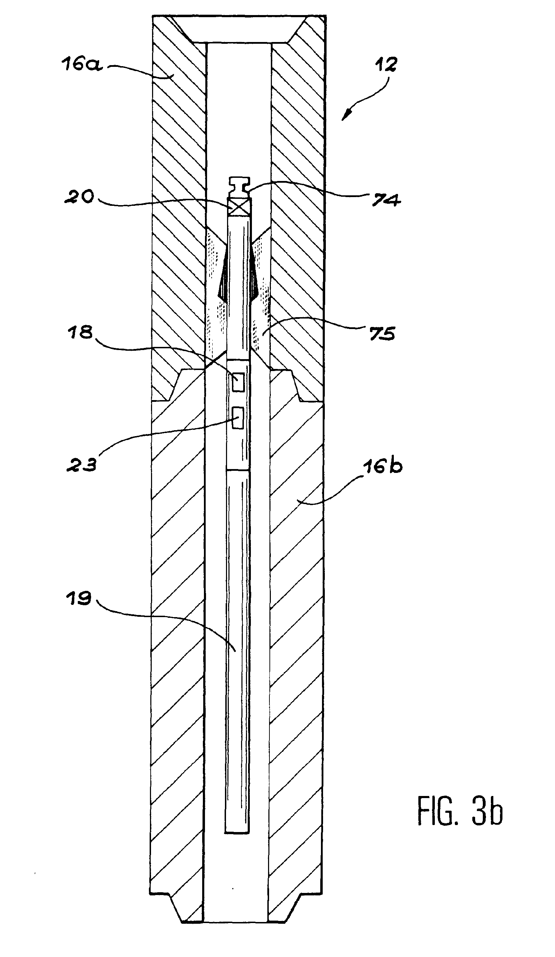

Dans une forme de réalisation alternative présentée sur la figure 3b il est possible de placer le capteur sismique 18 dans la navette 19, d'équiper cette dernière d'une tête de repêchage 74 et de remplacer le monopode 21 par un système d'ancrage 75 (communément appelé " Latch " dans la profession) qui permet alors le repêchage de la navette 19 à l'aide d'un câble slickline classique tel que décrit plus loin dans le texte puis sa remise en place par ce même câble slickline ou plus simplement par chute libre à travers l'intérieur du train de tiges 5.

La source sismique 6 peut être un canon à air, un vibrateur ou un explosif. Il peut y avoir plusieurs sources disposées selon des axes précis et ces sources peuvent être fixes ou mobiles dans le cas de certains procédés tels que ceux qui sont connus sous les noms de " Walkaway VSP " " Walkabove VSP ". Le géophone de référence 8 pourrait être remplacé par exemple par un hydrophone ou un accéléromètre, ou par un nombre plus important de capteurs. Le ou les capteurs de référence peuvent être disposés non seulement à proximité de la source sismique 6, mais aussi sur l'appareil de forage ou sur le train de tiges 5 lui-même. De même, le capteur d'outil 18 peut être indifféremment un géophone, un hydrophone ou un accéléromètre très sensible. Il peut y avoir un seul capteur orienté selon l'axe vertical de l'outil 12 ou tout autre axe, mais on peut également utiliser plusieurs capteurs orientés selon divers axes. Un cas particulier consiste à équiper l'outil 12 de trois capteurs sismiques disposés selon trois axes orthogonaux entre eux de façon à enregistrer les trois composantes du signal sismique. Dans ce dernier cas, l'enregistrement sismique devient exploitable même si l'inclinaison et l'orientation sont inconnues. Toutefois le traitement sismique s'en trouvera simplifié si un outil MWD (système de mesure d'inclinaison et d'orientation couramment utilisé en forage) est installé à proximité de l'outil car dans ce cas il suffira de relever la position angulaire des deux outils pour pouvoir déterminer l'orientation des capteurs au moment de la mesure.

Comme on l'a signalé, la synchronisation des mesures de fond et de surface par le géophone de référence 8 et le capteur d'outil 18 est essentielle pour exploiter les données sismiques. De fait, on doit prévoir des possibilités de synchronisation ainsi que des moyens de correction de celle-ci. On propose d'utiliser un système d'horloges synchronisées et présentant une dérive relative extrêmement faible, ces horloges étant respectivement associées aux capteurs de surface et de fond. L'horloge 48 associée au module de commande 10 et au géophone de référence 8 est considérée comme l'horloge de référence du système : c'est elle qui permet de dater les enregistrements réalisés par l'enregistreur sismique 9 et c'est par rapport à elle qu'on viendra caler et synchroniser l'horloge de fond 23, associée au capteur d'outil 18.

La réalisation d'une horloge intégrable dans la navette 19 pose un problème ardu, car les conditions d'utilisation en vibrations, chocs et température sont sévères. La réalisation choisie implique l'emploi d'une horloge à quartz, malgré certaines causes d'imprécision qui sont explicitées ci-dessous.

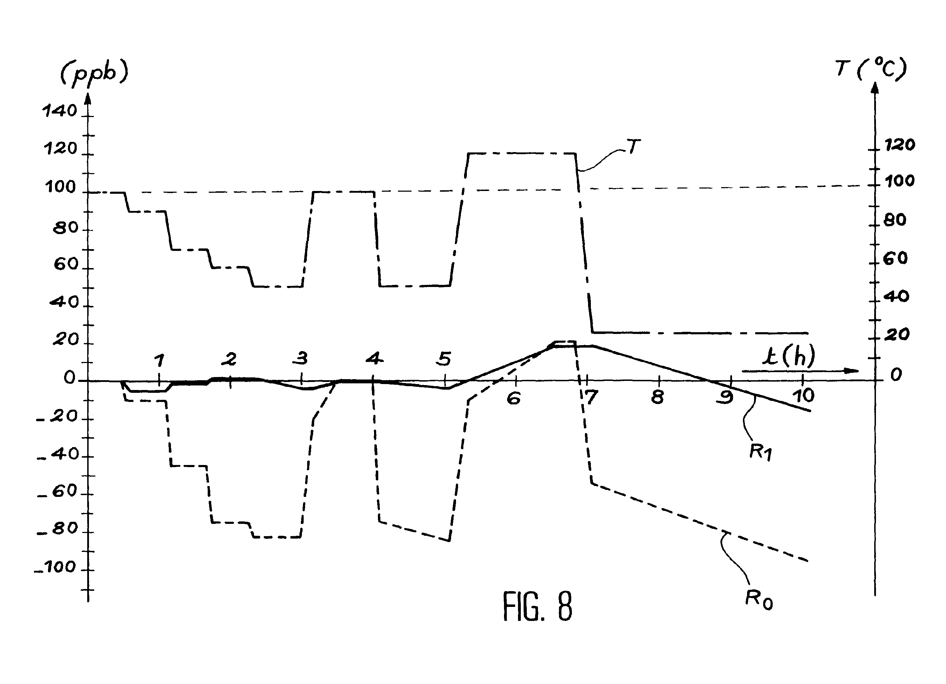

La figure 7 donne des courbes de la fréquence f de battement d'un quartz taillé selon la coupe SC (pour emprunter les termes de l'art) en fonction de la température θ. Selon l'angle de coupe, on obtiendra des courbes telles que C1, C2 ou C3, qui présentent des fréquences presque égales à une température de 90°C : si le quartz est maintenu près de cette température, sa fréquence variera très peu, surtout si on le taille à l'angle de la courbe C1, qui présente un palier presque uniforme pour cette valeur de température. Plus généralement, on pourra maintenir le quartz à une température où la courbe de variation de fréquence en fonction de la température présente une dérivée nulle. A proximité de ces points la variation relative de fréquence n'est que de quelques parties par milliard pour une variation de température de quelques degrés. Des résultats un peu moins bons seraient obtenus avec d'autres tailles du quartz, comme la coupe AT.

Les courbes C2 et C3 donnent d'autres courbes de dérive relative pour des écarts de -1° et +1° de l'angle de coupe de la courbe C1. On voit qu'une dérive relative de $10^{-7}$ ou $10^{-6}$ est en général atteinte dès que la température a varié de quelques dizaines de degrés.

Il n'est cependant pas possible de se contenter de l'asservissement d'un quartz en température pour construire une horloge de fond satisfaisante, car les variations de température peuvent être importantes et brutales dans un puits, de sorte que le système d'asservissement en température ne peut pas les compenser immédiatement. De plus, une telle réalisation ne résout le problème de synchronisation que pour les températures inférieures à la température choisie ; or pour couvrir toutes les températures, il faudrait choisir la plus haute température susceptible d'être rencontrée dans un puits (par exemple 150°C), mais dans ce cas un asservissement à cette température exigerait plus d'énergie qu'on ne peut en loger dans les batteries de l'outil. On doit donc renoncer à cette solution que la figure 7 rendait plausible.

Nous avons été conduits à choisir une horloge à correction automatique de fréquence en fonction de la température de type dual-mode où l'information de la température θ est donnée par le quartz lui-même grâce au battement entre la fréquence (fl) du fondamental et celle (f3) du partiel 3 divisé par 3, qui est une fonction linéaire de la température selon la formule

$$\left( f1 \ - \ \frac{f3}{3} \ = \ k\Theta \right).$$

La correction de fréquence est ensuite réalisée numériquement d'après les valeurs mesurées auparavant de la courbe $f_1(\theta)$. Ce procédé permet d'obtenir une bonne stabilité de la fréquence en fonction de la température. Toutefois, la précision obtenue par cette méthode d'auto-correction est de l'ordre de $10^{-7}$ (dans la plage de température allant de 0°C à 125°C) et ne suffit pas à notre application ; c'est pourquoi nous proposons de perfectionner cette horloge en stabilisant la température du quartz pour obtenir des résultats meilleurs et qui permettront d'atteindre les objectifs.

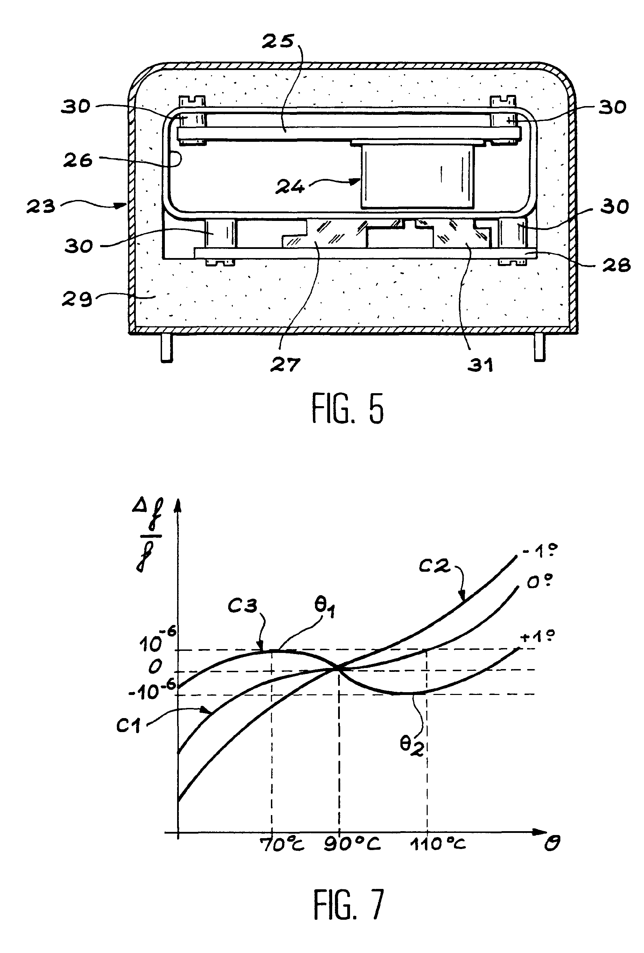

Le dispositif d'horloge de fond 23 représenté en détail à la figure 5 comprend ainsi, autour d'un boîtier 24 dans lequel le cristal de quartz est enclos, un circuit électronique 25, une enveloppe 26 contenant le boîtier 24 et le circuit électronique 25, un dispositif de chauffage 27 relié à l'enveloppe 26, un circuit 28 de commande du dispositif 27, et une enceinte extérieure 29 emplie d'un produit tel que l'aérogel de silice sous forme de poudre, ou d'une autre matière choisie pour sa bonne isolation thermique. Un procédé d'isolation thermique basé sur l'utilisation d'une enceinte de type Dewar peut aussi être utilisé. Par ailleurs, des vis et entretoises généralement référencées par 30 fixent tous les éléments précités à l'intérieur de l'enceinte 29 et entre eux afin de leur donner la stabilité mécanique nécessaire. Le circuit électronique 25 comprend un circuit oscillateur réalisant la correction de la fréquence du quartz de la façon décrite ci-dessus et un module de calage permettant de caler précisément la fréquence de sortie de l'horloge 23 en fonction de l'horloge de référence 48 au moment d'une synchronisation préliminaire en surface. La fréquence de sortie de l'oscillateur pourra par exemple être fixée à 10 Mhz. Il est possible de commander l'intensité du chauffage de l'enveloppe 26 par l'intermédiaire des éléments 27 et 28 pour réaliser un asservissement en température du contenu de l'enceinte 29 et limiter les dérives de fréquence de l'horloge de fond 23 et les imprécisions qu'elles entraînent.

La figure 8 permet de comparer dans des conditions de température variables les résultats obtenus par la seule correction de fréquence de type dual-mode puis en combinant cette dernière avec une régulation thermique à 100°C. La courbe T représente la température de l'enceinte (échelle à droite en degrés Celsius), la courbe R0 représentent la variation relative de la fréquence de l'horloge sans régulation thermique (échelle de gauche, variation relative de fréquence en parties par milliard), la courbe R1 représentent la variation relative de la fréquence de l'horloge avec régulation thermique (échelle de gauche, variation relative de fréquence en partie par milliard).

Cette expérience permet de mettre en évidence le gain de stabilité que l'on obtient par stabilisation de la température. En effet sans régulation thermique la dérive peut atteindre 100 ppb ($10^{-7}$) alors que cette dérive reste inférieure à 10 ppb ($10^{-8}$) si l'horloge est pourvu d'une régulation thermique.

Le test a été complété en portant la température ambiante au-dessus de la température limite de régulation (100°C) puis au-dessous de la valeur limite inférieure de régulation (50 °C dans ce cas) pour simuler certaines situations d'échauffement ou de refroidissement dans les puits de forage et dans ces deux cas la dérive a bien sûr été plus importante (20ppb) mais acceptable si l'on considère que ces événements sont momentanés.

On peut adjoindre au dispositif précédemment décrit un moyen de dissipation thermique (il peut s'agir d'un module à effet Peltier 31 également relié à l'enveloppe 26). Un tel dispositif permettrait de conserver la température idéale de fonctionnement du quartz dans le cas où la température environnante serait supérieure à cette dernière. Il est aussi possible de diminuer la température limite inférieure de régulation en augmentant la quantité d'énergie utilisée dans le dispositif de régulation thermique.

Toutefois si l'on a une connaissance à priori de la température maximale du puits, on peut alors choisir le point de régulation quelques degrés au dessus de celle-ci et un asservissement obtenu avec le seul dispositif de chauffage peut suffire dans la plupart des situations.

Il convient de souligner que l'utilisation d'une horloge de type dual-mode telle que décrite ci-dessus permet de choisir la température d'asservissement de la régulation thermique (dans la gamme de température usuelle de 0°C à 125°C environ) en gardant la précision requise, contrairement au cas d'une horloge de type OCXO où l'on doit asservir aux températures de stabilité des courbes C2 et C3 (les points où la dérivée de la fonction fréquence/température s'annule). Cela est très important pour des essais de longue durée, où il n'est pas toujours possible de fournir une énergie de régulation suffisante à l'enceinte 29 pour la maintenir à la température de stabilité maximale du quartz

Enfin, le choix de la température d'asservissement peut être définitif ou non : on peut le changer soit en remontant l'outil 12, soit en communiquant avec lui par un des moyens décrits plus loin dans un autre contexte (transmission électromagnétique, câble électrique, navette secondaire, etc..).

L'autre contrainte concerne les chocs et les vibrations subis par l'outil 12. Au fond du puits, l'outil peut subir des chocs équivalent à 1000g ½ sinus d'une durée d'une milliseconde et des vibrations dont les accélérations peuvent atteindre 20 g efficaces dans la bande de 20 Hertz à 2000 Hertz.

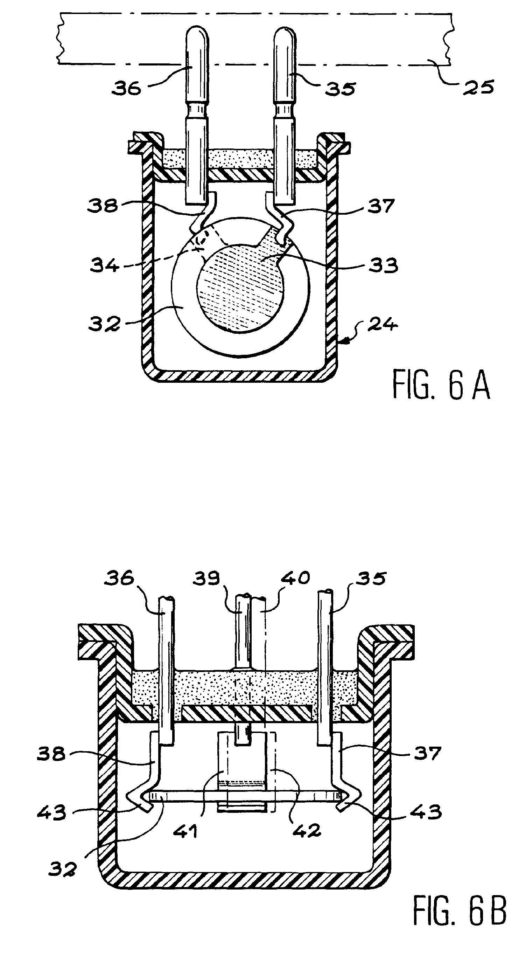

La figure 6a montre comment le cristal 32 muni de ses électrodes 33 et 34 est monté dans le boîtier 24, des broches 35 et 36 de connexion reliées au circuit électronique 25 menant aux électrodes respectives 33 et 34 par des agrafes de fixation conductrices 37 et 38 flexibles soudées aux électrodes 33 et 34 qui permettent de tenir le cristal 32 sans qu'il touche le boîtier 24. On doit aussi mentionner le montage de la figure 6b, où le cristal 32 est posé à plat, parallèlement au circuit électronique 25, et où on ajoute deux broches 39 et 40 aux précédentes 35 et 36, et deux agrafes de fixation supplémentaires 41 et 42 respectivement reliées à ces nouvelles broches 39 et 40 et qui servent aussi à tenir le cristal 32. Les agrafes de fixation 37, 38, 41 et 42 sont désormais placées sur deux diamètres perpendiculaires du cristal 32 qu'elles enserrent de façon élastique. Comme précédemment, elles sont soudées aux broches 35, 36, 39 et 40. Ce montage à quatre points offre une bien meilleure résistance mécanique que le précédent et est donc préféré.

L'horloge de référence 48 associée au module de référence 10 n'est pas soumise aux mêmes contraintes. Une horloge à quartz de type OCXO, dont la température de fonctionnement a été choisie pour correspondre à l'un des points à dérivée nulle de la courbe fréquence-température, selon les explications données à propos de la figure 7, suffit ici. Une stabilité en fréquence de l'ordre de $10^{-9}$ peut être obtenue avec ce type d'horloge. Une autre horloge convenable est une horloge atomique (fondée sur les transitions d'énergie des atomes d'un gaz que l'on vient exciter électriquement) ; la stabilité sera même meilleure ($10^{-11}$) au prix d'une mise en oeuvre plus délicate. Il faut souligner qu'une telle horloge ne pourrait convenir pour le capteur d'outil 18.

Lorsque la navette 19 est en surface, il est possible de connecter celle-ci directement au module de commande 10 et de mesurer la fréquence de l'horloge de fond 23 par rapport à la fréquence de l'horloge de référence 48 et de la modifier si nécessaire ; il est également possible de mesurer la dérive relative des horloges et de l'annuler à l'instant de synchronisation initiale. Quoiqu'un avantage de l'invention soit de ne pas nécessiter de synchronisations ultérieures, on peut garder la possibilité d'en refaire quand l'outil 12 est engagé dans le puits 1. Elles peuvent être utiles si on modifie la température de régulation de l'horloge 23. Quelques méthodes de synchronisation sont rappelées ci-dessous.

On peut prévoir l'utilisation d'une transmission à distance telle que la transmission électromagnétique. Le principe est basé sur l'émission dans le sol d'une onde par le transmetteur électromagnétique 10. Le message comporte un code de synchronisation qui, lorsqu'il est reconnu par l'outil 12, lui permet de déterminer son éventuelle dérive. La valeur de dérive sera enregistrée en mémoire pour le traitement ultérieur des données et pourra aussi être émise vers la surface par une onde électromagnétique de retour. La reconnaissance du code de synchronisation dans un milieu bruité fait appel à des techniques connues de traitement de signal. Il faut noter que cette technique permet à elle seule la synchronisation des mesures de fond et de surface. Cette méthode ne peut toutefois convenir que si les caractéristiques des terrains traversés permettent la transmission de l'onde électromagnétique avec une atténuation compatible avec la rapport signal à bruit nécessaire à la synchronisation recherché. Sinon, le code de synchronisation ne peut être reçu par l'outil 12, et des techniques de remplacement doivent être envisagées.

Dans le cas où la réception du code de synchronisation devient impossible à partir d'une certaine profondeur, il est toujours possible, à l'occasion d'une manoeuvre de contrôle de trou ou de reforage, de revenir au-dessus de cette profondeur limite et de faire un contrôle de la synchronisation à ce niveau. La valeur de la dérive ainsi mesurée sera enregistrée dans la mémoire de l'outil pour traitement ultérieur.

Une autre possibilité consiste à connecter par le câble 19 l'outil 12 et le système de surface. Cette opération est possible en utilisant la technique bien connue en milieu pétrolier du câble électrique consistant à descendre un câble mono-conducteur ou multi-conducteurs dans le train de tiges 5 et à le connecter sur le haut du monopode 21 par le connecteur étanche 22, prévu pour une utilisation dans ces environnements. Quand la communication est établie, on peut alors envoyer les signaux de synchronisation depuis la surface vers l'outil 12. Le câble est ensuite déconnecté de la navette 19 et remonté à la surface. Un inconvénient de cette méthode est d'imposer un arrêt total des opérations de forage.

Nous avons donc imaginé une méthode alternative beaucoup moins contraignante consistant à utiliser une navette secondaire autonome que l'on synchronise avec l'horloge de surface puis que l'on laisse descendre dans le puits 1, soit en chute libre soit à l'extrémité d'un câble métallique dit " slickline ". Cette dernière se connecte à la navette 19 principale par l'intermédiaire du connecteur 22 et on peut alors mesurer puis annuler la dérive de la navette principale par rapport à la navette secondaire. Compte tenu du faible écart de temps (au maximum 30 minutes) entre le moment où l'on synchronise la navette secondaire avec l'horloge de surface 48 et le moment où l'on connecte la navette secondaire à la navette 19 principale, on peut considérer que suite à cette opération la navette 19 principale est parfaitement synchronisée avec l'horloge de surface 48.

Une autre méthode possible consiste à répéter, lors de la remontée du train de tiges ou d'une manoeuvre de contrôle de trou, les enregistrements sismiques qui ont été réalisés pendant la phases de forage et ceci bien sûr aux mêmes cotes. Ce faisant on pourra mesurer, par exemple sur les temps d'arrivée directs correspondant aux mêmes positions du train de tiges, quelle a été la valeur de la dérive entre ces deux enregistrements.

Plusieurs dispositifs de démarrage de enregistrements par l'outil 12 sont prévus en fonction des circonstances. Une première méthode consiste à faire démarrer l'enregistrement de façon automatique à intervalles réguliers préalablement définis. On programme dans l'outil 12 un rythme de déclenchement régulier, par exemple d'une durée d'une minute toutes les dix minutes, et l'enregistrement se produira quoi qu'il arrive. L'utilisation des horloges synchrones telles que décrites précédemment permet de connaître les moments précis de ces périodes d'enregistrement. Donc, pour réaliser un enregistrement sismique, il suffira d'arrêter le forage pendant quelques instants avant l'une des périodes d'enregistrement programmées, de lancer l'acquisition sur l'enregistreur de surface 9 et générer une onde de choc à l'aide du canon à air 6. A la fin du temps d'enregistrement programmé, le forage sera repris.

On peut améliorer ce dispositif d'enregistrement en lui adjoignant un capteur de mouvement (par exemple un accéléromètre suffisamment sensible) et dans ce cas l'enregistrement ne se fait que si le train de tiges est immobile ; cette condition est indispensable pour un enregistrement sismique de qualité et l'immobilité du train de tiges peut être détectée grâce au capteur de mouvement (le moyen le plus simple étant de considérer que le train de tiges est immobile si les accélérations mesurées sont inférieures à un seuil de 0,1g par exemple).

Notre méthode de déclenchement préférée consiste à utiliser la détection des mouvements du train de tiges 5 : un accéléromètre suffisamment sensible est placé dans la navette 19 dans l'axe du train de tiges 5, l'intégration des valeurs qu'il fournit donne la vitesse et le sens de déplacement du train de tiges 5. On peut alors, en manoeuvrant alternativement celui-ci vers le haut et vers le bas, envoyer un code à l'outil 12 et lancer ainsi la procédure d'enregistrement. De la même façon, si on place l'accéléromètre perpendiculairement à l'axe de l'outil, celui-ci devient sensible au mouvement de rotation du train de tiges 5 et on peut alors déclencher le démarrage de l'enregistrement en alternant les phases de rotation et d'arrêt de rotation selon une séquence précise, déterminée à l'avance et connue de l'outil 12. Ces deux méthodes peuvent aussi être combinées (par l'utilisation de deux accéléromètres) afin de réduire les possibilités d'un démarrage inopiné.

Nous pourrions aussi utiliser un certain nombre de méthodes connues telles que :

1) L'émission à partir de la surface d'un code électromagnétique particulier par le transmetteur 11, à la réception duquel l'outil 12 fait démarrer un enregistrement après un délai fixe, également connu du système de surface. Le transmetteur 11 permet d'envoyer d'autres commandes, comme la durée de l'enregistrement, et de contrôler la synchronisation comme on l'a mentionné.

2) L'emploi d'un " flow-switch " intégré dans l'outil 12. Un tel appareil est sensible à la différence de pression entre l'intérieur et l'extérieur du train de tiges 5 : celle-là varie notamment entre les phases de pompage et les phases d'arrêt de pompage, ce qui permet de détecter l'arrêt des pompes de forage au fond du puits 1, et on peut alors envoyer une commande de démarrage de l'enregistrement à l'outil 12, de la surface, en agissant sur les pompes de forage. Pour cela une méthode connue consiste à réaliser une suite de séquences marche/arrêt des pompes selon une séquence prédéfinie. Cette séquence forme alors un code qui peut être reconnu par l'outil 12. Un autre mode de réalisation possible du flow-switch consiste à créer artificiellement une perte de charge au niveau de la navette 19 en l'équipant par exemple d'un système d'ailettes, et, de la même façon que précédemment, la différence de pression de la perte de charge ainsi créée variera entre les phases de pompage et les phases d'arrêt de pompage, ce qui permettra de détecter la mise en marche ou l'arrêt des pompes de forage et de déclencher l'enregistrement.

Les données enregistrées, relatives aux essais sismiques et aux synchronisations, sont stockées dans le module de mémoire intégré à la navette 19. Lorsque tout le train de tiges 5 est remonté à la surface, on déconnecte la navette 19 du monopode 21 et on la relie à un système de relecture permettant de stocker rapidement les données sur un support informatique pour les traiter ensuite. Mais si on désire disposer des informations avant la fin du forage, on prévoit trois autres méthodes pour accéder aux données.

La première se fait par repêchage au câble slickline de la navette 19, et après relecture de la mémoire la navette 19 est redescendue et remise en place soit par le même procédé soit par une chute libre dans le train de tiges 5 ; il s'ancre automatiquement dans un dispositif récepteur équipant la masse-tige 16 (représenté sur la figure 6b). On doit noter que cette opération de repêchage est une opération bien connue dans le milieu pétrolier pour d'autres outils, mais elle nécessite l'arrêt des opérations de forage. Un avantage est pourtant que la navette 19 peut être resynchronisée si nécessaire avant d'être remise au fond du puits 1. Cette méthode permet également de limiter la dérive relative des deux horloges car elle assure une durée minimale entre leur synchronisation initiale et l'enregistrement des premières données, notamment si la remise en place de la navette 19 se fait par chute libre.

La récupération des données par l'intermédiaire d'une navette secondaire, suspendue à un câble slickline et qui vient se connecter à l'outil 12 quand elle est descendue, constitue une autre solution. Dans ce cas le transfert des données se fait dés que les deux navettes sont connectées et les données seront relues en surface dès que la navette secondaire est remontée.

Une autre méthode consiste à se connecter par un câble électrique depuis la surface jusqu'à la navette 19 par l'intermédiaire du connecteur étanche 22 (comme décrit à propos de la synchronisation) ; on peut alors relire les données stockées dans la mémoire de la navette 19 directement depuis la surface.

Enfin, une dernière solution consiste à utiliser la transmission électromagnétique entre le fond et la surface, ce qui ne nécessite pas d'arrêter les opérations de forage mais ne permet de transmettre qu'une quantité très limitée de données à cause du faible débit de la liaison ; une compression des données ou un traitement des signaux directement dans l'outil de fond (de façon à ne transmettre que les résultats) pourraient remédier à cette limitation.

On prévoit de placer l'outil 12 au sein du train de tiges 5 auprès du trépan 4, mais il pourrait aussi être plus haut dans la garniture de forage si les conditions de fonctionnement, notamment de température, y étaient plus favorables. Si les conditions de forage le permettent, si par exemple le puits est stable et sans risque de collage, la procédure d'enregistrement consistera à poser l'outil au fond, à appuyer à quelques tonnes, à poser le train de tiges 5 sur cales et à le déconnecter de la tige carrée ou du moteur d'entraînement. Ces conditions garantissent le meilleur couplage du capteur d'outil 18 au terrain et le moins de bruit parasite. Si les conditions de forage sont moins favorables, on pourra effectuer l'enregistrement au moment des ajouts de tige lorsque le train de tiges 5 est sur cales et déconnecté de la tige d'entraînement ou du moteur. Dans ce cas, le couplage du capteur au terrain se fera par le contact entre les stabilisateurs et les parois du puits 1.

L'utilisation de la source sismique 6 pourra être répétée plusieurs fois à des intervalles de temps fixes ou variables, par exemple sur six tirs espacés de 20 secondes, afin d'augmenter le rapport signal/bruit en faisant la somme des réponses aux tirs, selon des méthodes de traitement connues. La durée de l'enregistrement sur l'outil 12 de fond pourra être ajustée en conséquence avant la descente de l'outil 12 dans le puits ou avant chaque enregistrement si l'on utilise la liaison électromagnétique.

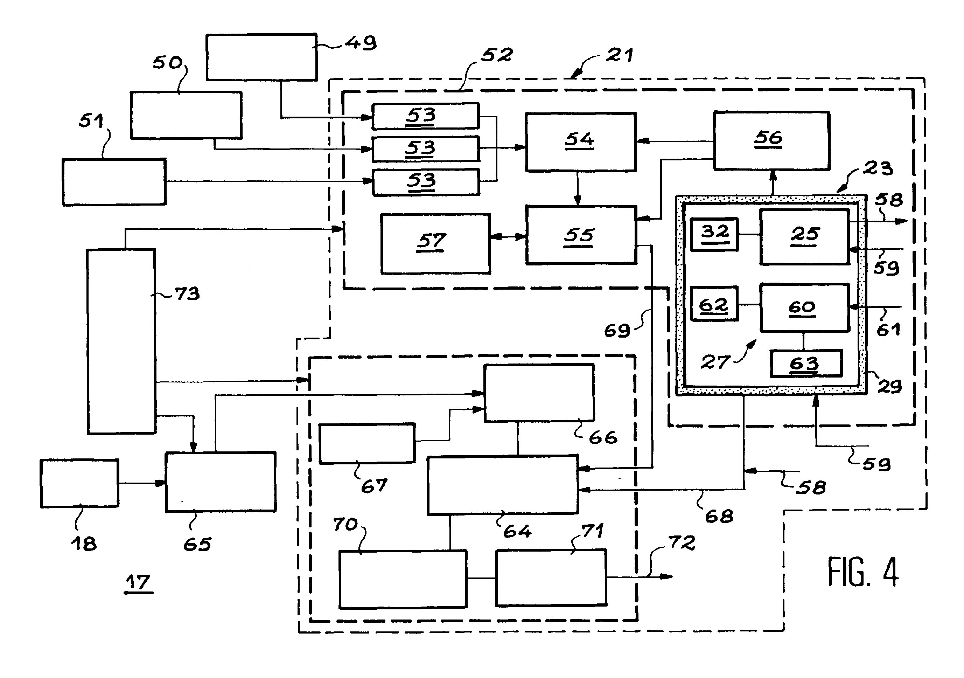

Si on choisit d'associer plusieurs de ces éléments et procédés dans une réalisation concrète de l'invention, la navette 19 et ses éléments annexes peuvent prendre l'aspect schématique de la figure 4 : un capteur de mouvement 51, un récepteur électromagnétique 50 ou un " flow-switch " 49 envoient leurs informations à un circuit de déclenchement 52 qui comprend l'horloge de fond 23, et d'abord à des filtres et amplificateurs 53 respectifs, puis à un convertisseur analogique-numérique 54 , et enfin à un microprocesseur 55 de commande.

L'horloge 23 fournit le signal du circuit oscillateur 25 à des diviseurs de fréquence 56 qui aident à régler la cadence de fonctionnement du convertisseur analogique-numérique 54 et du microprocesseur 55. Une mémoire vive 57 est associée au microprocesseur 55 pour tenir à sa disposition des valeurs de temporisation, de seuil de déclenchement, etc. et pour recevoir des informations sur le déroulement des mesures. Ces composants et techniques, de même que certains des suivants, sont usuels et ne méritent donc pas de commentaire détaillé ; on notera cependant que le circuit électronique 25 est muni d'une borne de sortie 58 où son signal peut être lu, et d'une borne d'entrée 59 par laquelle la synchronisation et le calage avec l'horloge de référence peuvent être faits.

Le dispositif de chauffage 27 est composé d'un circuit de commande 60 pouvant être renseigné par une prise de consigne de température 61, un capteur de température 62 qui régit le fonctionnement d'un système de chauffage 63 tel qu'une résistance électrique. La prise 61 permet d'appliquer, en général une fois pour toutes quand l'outil 12 est en surface, la température voulue pour le quartz 32, et le capteur de température 62 est de préférence un appareil ordinaire, de précision suffisante pour le but recherché. Si le dispositif de refroidissement 31 est adjoint, il est construit de la même façon.

Le coeur du module de mémoire de la navette 19 est un circuit logique d'acquisition 64 des mesures du capteur d'outil 18, qui lui parviennent par un filtre et un amplificateur 65 et un autre convertisseur analogique-numérique 66. Un capteur de température 67 est également connecté au convertisseur 66, ce capteur permettant d'enregistrer la température du puits 1. Le circuit logique d'acquisition 64 est encore relié à l'horloge de fond 23 et au microprocesseur 55 par des lignes 68 et 69 qui lui fournissent la fréquence nécessaire à l'acquisition et les signaux de démarrage et d'arrêt de l'enregistrement. Les résultats mesurés et enregistrés par le circuit logique d'acquisition 64 s'accumulent dans une mémoire non volatile 70, qu'il est possible de lire et de vider par une interface de relecture 71 dont la borne de sortie 72 mène encore à une prise de branchement d'un appareil idoine (si la lecture a lieu quand l'outil 12 est remonté du puits 1), à un émetteur électromagnétique ou à un câble électrique lorsque celui-ci est en place.

Une alimentation 73 fournit l'énergie nécessaire aux différents constituants de l'outil 12. Le circuit de déclenchement 52 et le module de mémoire peuvent être placés dans la navette 19, ainsi que l'alimentation 73, les capteurs 49 et 51, le filtre et amplificateur 65, et les capteurs 18 et 50 dans la chambre étanche 17. Le capteur de mouvement 51 est le capteur qui est utilisé pour détecter les mouvements du train de tiges 5 ; le récepteur électromagnétique 50 est utilisé en liaison avec le transmetteur 11 ; et le " flow-switch " 49, sensible à des variations de pression dans le train de tiges 5, est utilisé comme les deux autres pour commander le démarrage des enregistrements.

## Revendications

1. Dispositif permettant de réaliser des mesures sismiques dans un puits (1) en cours de forage, comprenant une source sismique de surface (6), un enregistreur (9) relié à un capteur sismique de référence (8), un capteur sismique de puits (18) situé dans un outil (12) placé dans une garniture de forage (5), où les capteurs sismiques sont associés à un système d'horloges synchronisées de faible dérive, **caractérisé en ce que** l'horloge (23) de l'outil (12) est une horloge de type dual-mode enclose dans une enceinte thermique (21) et un système de régulation thermique (27) est disposé dans l'enceinte permettant de stabiliser la température de l'horloge (23) à une valeur déterminée.

2. Dispositif permettant de réaliser des mesures sismiques dans un puits (1) en cours de forage, utilisant l'outil de forage (4) comme source sismique, comprenant un enregistreur (9) relié à un ou plusieurs capteurs sismique de surface (77), un capteur sismique de puits (18) situé dans un outil (12) placé dans une garniture de forage (5), où les capteurs sismiques sont associés à un système d'horloges synchronisées de faible dérive, **caractérisé en ce que** l'horloge (23) de l'outil (12) est une horloge de type dual-mode enclose dans une enceinte thermique (21) et un système de régulation thermique (27) est disposé dans l'enceinte permettant de stabiliser la température de l'horloge (23) à une valeur déterminée.

3. Dispositif selon la revendication 1 ou 2, **caractérisé en ce que** le système de régulation thermique est pilotable de façon à pouvoir changer la température d'asservissement en fonction des conditions du puits (1).

4. Dispositif selon l'une quelconque des revendications 1 à 3, **caractérisé en ce que** le système de régulation thermique comprend un moyen de chauffage. Dispositif selon l'une quelconque des revendications 1 à 3, **caractérisé en ce que** le système de régulation thermique comprend un moyen de refroidissement.

5. Dispositif selon l'une quelconque des revendications 1 à 3, **caractérisé en ce que** le système de régulation thermique combine un moyen de chauffage et un moyen de refroidissement.

6. Dispositif selon l'une quelconque des revendications 1 à 3, **caractérisé en ce que** le système de régulation thermique combine un moyen de chauffage et une moyen de refroidissement.

7. Dispositif selon l'une quelconque des revendications 1 à 6 permettant de relier directement l'outil (12) lorsqu'il est en surface et le module de commande (10) de façon à synchroniser les deux horloges qu'ils contiennent.

8. Dispositif selon l'une quelconque des revendications 1 à 6, **caractérisé en ce que** les démarrages successifs d'enregistrement de l'outil (12) se font de façon automatique à intervalles réguliers préalablement définis.

9. Dispositif selon l'une des revendications 1 à 6, **caractérisé en ce qu'**il comprend un capteur de mouvement permettant un démarrage de l'enregistrement en communiquant des mouvements prédéfinis à la garniture de forage.

10. Dispositif selon l'une quelconque des revendications 1 à 6, **caractérisé en ce qu'**il comprend un système de transmission électromagnétique (11) entre un module de commande (10) et l'outil (12) permettant la synchronisation directe des mesures de fond et de surface, la vérification à posteriori de cette synchronisation, l'envoi d'une commande de démarrage de l'enregistrement vers l'outil (12), l'envoi d'une nouvelle valeur de température d'asservissement de l'horloge (23) ou l'émission vers la surface d'une partie des données enregistrées.

11. Dispositif selon l'une quelconque des revendications 1 à 6, **caractérisé en ce qu'**il comprend un câble électrique pouvant être descendu dans le puits (1) et relier ainsi le module de commande (10) et l'outil (12) pour permettre la synchronisation des deux horloges (48, 23), le changement de la valeur de température d'asservissement de l'horloge (23) de l'outil ou la relecture des données enregistrées dans la mémoire de l'outil (12).

12. Dispositif selon l'une quelconque des revendications 1 à 6, **caractérisé en ce qu'**il comprend un système d'ancrage (75) permettant de repêcher la navette (19) à l'aide d'un câble slickline, de la remonter à la surface pour la synchronisation des deux horloges (48, 23), le changement de la valeur de température d'asservissement de l'horloge de l'outil (23) ou la relecture des données enregistrées puis de la remettre en place soit par chute libre à travers l'intérieur des tiges de forage soit à l'aide d'un câble slickline.

13. Dispositif selon l'une quelconque des revendications 1 à 6, **caractérisé en ce qu**'il comprend une câble slickline permettant de descendre dans le puits (1) soit une navette secondaire, initialement synchronisée en surface avec le module de commande (10) et venant se connecter sur la navette principale (19) pour permettre de synchroniser cette dernière et de relire les données qu'elle contient soit un outil de repêchage permettant de remonter la navette (19) à la surface pour relire les données enregistrées ou effectuer une synchronisation puis de la remettre en place dans une masse-tige (16a).

14. Dispositif selon l'une quelconque des revendications 1 à 6, **caractérisé en ce qu**'il comprend un flow-switch permettant de démarrer un enregistrement par l'outil (12).

15. Procédé de mesures sismiques dans un puits (1) en cours de forage, consistant à installer une source sismique (6), un capteur sismique de référence (8) en surface, un capteur sismique de puits (18) dans un outil (12) d'une garniture de forage (5), à pourvoir les capteurs d'horloges à faible dérive, **caractérisé en ce que** les horloges font l'objet d'une synchronisation préliminaire aux enregistrements, avant de descendre l'outil (12) dans le puits et d'envoyer des ondes sismiques aux capteurs, et en ce que l'horloge du capteur de puits est maintenue à une température constante par une régulation thermique.

16. Procédé de mesures sismiques dans un puits en cours de forage, consistant à installer une source sismique (6), un capteur sismique de référence (8) en surface, un capteur sismique de puits (18) dans un outil (12) d'une garniture de forage, à pourvoir les capteurs d'horloges à faible dérive, à descendre l'outil (12) dans le puits et à générer des ondes sismiques, **caractérisé en ce que** l'horloge du puits est maintenue à une température déterminée mais susceptible d'être modifiée, et en ce qu'une synchronisation des horloges est faite quand la température déterminée est modifiée.

17. Procédé de mesures sismiques selon les revendications 15 ou 16, **caractérisé en ce que** la synchronisation des horloges peut être reproduite après la descente de l'outil (12) dans le puits soit par transmission électromagnétique d'un code de synchronisation, soit à travers un câble électrique, soit en remontant une navette (19) à l'aide d'un câble slickline puis en la remettant en place par chute libre à travers un train de tiges ou par un câble slickline, soit par l'intermédiaire d'une navette secondaire qui vient se connecter sur une navette principale (19).

18. Procédé de mesures sismiques dans un puits (1) en cours de forage, consistant à utiliser l'outil de forage (4) comme source sismique et à installer un capteur sismique de référence (18) dans l'outil (12) d'une garniture de forage (5), des capteurs sismiques (8) en surface, à pourvoir les capteurs d'horloges à faible dérive, **caractérisé en ce que** les horloges font l'objet d'une synchronisation préliminaire aux enregistrement, avant de descendre l'outil (12) dans le puits et d'envoyer des ondes sismiques aux capteurs, et en ce que l'horloge du capteur de puits est maintenue à une température constante par une régulation thermique.

19. Procédé de mesures sismiques dans un puits en cours de forage, consistant à utiliser l'outil de forage (4) comme source sismique, à installer un capteur sismique de référence (18) dans l'outil (12) d'une garniture (5), des capteurs sismiques (8) en surface, à pourvoir les capteurs d'horloges à faible dérive, à descendre l'outil (12) dans le puits et à générer des ondes sismiques, **caractérisé en ce que** l'horloge du puits est maintenue à une température déterminée mais susceptible d'être modifiée, et en ce qu'une synchronisation des horloges est faite quand la température déterminée est modifiée.

20. Procédé de mesures sismiques selon les revendications 18 ou 19, **caractérisé en ce que** la synchronisation des horloges peut être reproduite soit par transmission électromagnétique d'un code de synchronisation, soit à travers un câble électrique, soit en remontant une navette (19) à l'aide d'un câble slickline puis en la remettant en place par chute libre à travers le train de tiges ou par un câble slickline, soit par l'intermédiaire d'une navette secondaire qui vient se connecter sur une navette principale (19).

21. Procédé selon les revendications 15 à 20, **caractérisé en ce que** l'on répète lors d'une manoeuvre de remontée du train de tiges les enregistrements sismiques qui ont été réalisés à des mêmes cotes pendant la phase de forage de façon à pouvoir contrôler la synchronisation des mesures entre ces deux instants.

22. Procédé de mesures sismiques selon l'une quelconque des revendications 15 à 21, **caractérisé en ce qu**'il comprend une commande de démarrage d'enregistrements des mesures soit automatique à intervalles réguliers préalablement définis, soit en communiquant à la garniture de forage une série de mouvements déterminés, soit par une transmission électromagnétique, soit par un flow-switch.

23. Procédé de mesures sismiques selon l'une quelconque des revendications 15 à 22, **caractérisé en ce qu'**il comprend des récupérations de données enregistrées, avant de remonter la garniture de forage, soit en remontant momentanément une navette (19) à l'aide d'un câble slickline, soit par une lecture à travers un câble électrique, soit par une transmission électromagnétique, soit par l'intermédiaire d'une navette secondaire descendu au câble slickline et que l'on vient connecter sur la navette principale (19).

FIG. 1a

FIG. 2

FIG. 1b

FIG. 3a

16a
12
20
74
18
75
23
16b
19

FIG. 3b

FIG. 4

EP 1 130 418 A1

FIG. 5

FIG. 7

FIG. 6 A

FIG. 6 B

FIG. 8

**Office européen des brevets**

## RAPPORT DE RECHERCHE EUROPEENNE

Numéro de la demande

EP 01 40 0491

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 555 220 A (MINTO JAMES) 10 septembre 1996 (1996-09-10) * colonne 4, ligne 19 – colonne 6, ligne 67; revendication 1 * | 15 | G01V1/52 |
| Y | | 1,7,18 | |
| A | | 2-6,16, 19 | |
| Y | US 4 305 041 A (FRERKING MARVIN E) 8 décembre 1981 (1981-12-08) * colonne 4, ligne 38 – ligne 53 * | 1,7 | |
| A | | 2 | |
| Y | WO 00 00847 A (DRESSER IND) 6 janvier 2000 (2000-01-06) * page 2, alinéa 1 – page 3, alinéa 2; revendication 1 * | 18 | |
| A | | 2 | |
| A | US 6 023 444 A (MABILE CLAUDE ET AL) 8 février 2000 (2000-02-08) * colonne 1, ligne 63 – colonne 2, ligne 31 * * colonne 3, ligne 60 – colonne 4, ligne 58 * * revendications 1,6 * | 8,10-12, 17,20, 22,23 | **DOMAINES TECHNIQUES RECHERCHES (Int.Cl.7)** G01V E21B |
| A | US 5 962 819 A (PAULSSON BJOERN N P) 5 octobre 1999 (1999-10-05) * colonne 3, ligne 29 – ligne 35 * | 14 | |

Le présent rapport a été établi pour toutes les revendications

| Lieu de la recherche | Date d'achèvement de la recherche | Examinateur |
|---|---|---|
| LA HAYE | 23 mai 2001 | Schneiderbauer, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 0491

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2001

| Document brevet cité au rapport de recherche | | Date de publication | Membre(s) de la famille de brevet(s) | | Date de publication |
|---|---|---|---|---|---|
| US 5555220 | A | 10-09-1996 | CA<br>GB<br>NL<br>NL<br>NO | 2152681 A<br>2290869 A,B<br>1000683 C<br>1000683 A<br>952548 A | 29-12-1995<br>10-01-1996<br>03-11-1998<br>28-12-1995<br>29-12-1995 |
| US 4305041 | A | 08-12-1981 | AUCUN | | |
| WO 0000847 | A | 06-01-2000 | US<br>EP | 6151554 A<br>1093590 A | 21-11-2000<br>25-04-2001 |
| US 6023444 | A | 08-02-2000 | FR<br>CA<br>EP<br>NO | 2742880 A<br>2193250 A<br>0780702 A<br>965461 A | 27-06-1997<br>23-06-1997<br>25-06-1997<br>23-06-1997 |
| US 5962819 | A | 05-10-1999 | AU<br>EP<br>NO<br>WO<br>US | 2992899 A<br>1062529 A<br>20004506 A<br>9946615 A<br>6206133 B | 27-09-1999<br>27-12-2000<br>13-11-2000<br>16-09-1999<br>27-03-2001 |

EPO FORM P0460

Pour tout renseignement concernant cette annexe : voir Journal Officiel de l'Office européen des brevets, No.12/82